# EUROPEAN PATENT APPLICATION

(11) **EP 4 535 593 A1**
(43) Date of publication of application: **09.04.2025**
(21) Application number: 23905250.9
(22) Date of filing: 28.07.2023
(51) Int. Cl.: H02J 3/38, H02J 3/30, H02J 3/32

(54) **WIND TURBINE CONVERTER CONTROL METHOD, APPARATUS AND DEVICE, AND WIND TURBINE SYSTEM**

(30) Priority: 21.12.2022 CN 202211647101
(71) Applicant: Beijing Goldwind Science & Creation Windpower Equipment Co. Ltd., Beijing 100176 (CN)
(72) Inventor: LI, Feng, Beijing 100176 (CN); YU, Xiao, Beijing 100176 (CN)
(74) Representative: Hoffmann Eitle
(86) International application number: PCT/CN2023/109813
(87) International publication number: WO 2024/131069

(57) **Abstract**

The present application belongs to the field of wind power generation. Disclosed are a wind turbine converter control method, apparatus and device, and a wind turbine system. The method comprises: on the basis of a direct current bus voltage given value and an acquired direct current bus voltage feedback value, obtaining a power control amount; when the power control amount exceeds an energy storage power capability range of an energy storage apparatus, splitting the power control amount into a first power control amount and a second power control amount according to a power capability boundary value of the energy storage power capability range, the first power control amount corresponding to the power capability boundary value; on the basis of the first power control amount, controlling the energy storage apparatus; and determining a first sum of the second power control amount and a machine-side power given value of a machine-side converter as an updated machine-side power given value, and, on the basis of the updated machine-side power given value, controlling the machine-side converter.

## Description

### CROSS-REFERENCE TO RELATED APPLICATIONS

The present disclosure claims priority to Chinese Patent Application No. 202211647101.9, titled "CONTROL METHOD, DEVICE, AND EQUIPMENT FOR WIND POWER CONVERTER, AND WIND POWER GENERATION SYSTEM" and filed on December 21, 2022, which is hereby incorporated by reference in its entirety.

### TECHNICAL FIELD

The present disclosure belongs to the field of wind power generation, and in particular relates to a control method of a wind power converter, a control device of the wind power converter, a control equipment of the wind power converter, and a wind power generation system.

### BACKGROUND

A wind turbine is an apparatus that can convert wind energy into electrical energy. The electrical energy generated by a wind turbine can be transmitted to a power grid via transmission networks for distribution by the power grid. With the development of wind power generation technology, in the case of significant frequency fluctuations in the power grid, the rotor kinetic energy of the generator in the wind turbine can be utilized to provide inertia support for the power grid. However, relying on the rotor kinetic energy of the generator in the wind turbine to provide inertia support for the power grid, the wind turbine may experience excessive fatigue load, thereby reducing the stability of the wind turbine.

### SUMMARY

The embodiments of the present disclosure provide a control method of a wind power converter, a control device of the wind power converter, a control equipment of the wind power converter, and a wind power generation system, which can improve the stability of the wind turbine.

In the first aspect, the embodiment of the present disclosure provides a control method of a wind power converter, which is applied to a wind turbine, the wind turbine comprises a machine-side converter and a grid-side converter, the grid-side converter is electrically connected to the machine-side converter through a DC bus, the DC bus is also electrically connected to an energy storage apparatus. The method comprises: obtaining a power control amount based on a given value of a DC bus voltage and a collected feedback value of the DC bus voltage; determining a first power control amount and a second power control amount according to the power control amount based on a power capacity boundary value of the energy storage power capacity range when the power control amount exceeds an energy storage power capacity range of the energy storage apparatus, wherein the first power control amount corresponds to the power capacity boundary value; controlling the energy storage apparatus based on the first power control amount; determining a first sum of the second power control amount and a machine-side power given value of the machine-side converter as an updated machine-side power given value, and controlling the machine-side converter based on the updated machine-side power given value.

In the second aspect, the embodiment of the present disclosure provides a control device of the wind power converter, which is applied to a wind turbine, the wind turbine comprises a machine-side converter and a grid-side converter, the grid-side converter is electrically connected to the machine-side converter through a DC bus, the DC bus is also electrically connected to an energy storage apparatus, wherein the device comprises: a power control amount calculation module, configured to obtain a power control amount based on a given value of a DC bus voltage and a collected feedback value of the DC bus voltage; a power control amount allocation module, configured to determine a first power control amount and a second power control amount according to the power control amount based on a power capacity boundary value of the energy storage power capacity range when the power control amount exceeds an energy storage power capacity range of the energy storage apparatus, wherein the first power control amount corresponds to the power capacity boundary value; an energy storage control module, configured to control the energy storage apparatus based on the first power control amount; a machine-side control module, configured to determine a first sum of the second power control amount and a machine-side power given value of the machine-side converter as an updated machine-side power given value, and control the machine-side converter based on the updated machine-side power given value.

In the third aspect, the embodiment of the present disclosure provides a control equipment of a wind power converter, comprising: a processor and a memory storing computer program instructions; when the processor executes the computer program instructions, the control method of the wind power converter according to the first aspect is implemented.

In the fourth aspect, the embodiment of the present disclosure provides a wind power generation system, comprising: the wind turbine comprising the machine-side converter and the grid-side converter, the grid-side converter is electrically connected to the machine-side converter through the DC bus; an energy storage apparatus is electrically connected to the DC bus; and the control equipment of the wind power converter according to the third aspect.

The embodiments of the present disclosure provide a control method of a wind power converter, a control device of the wind power converter, a control equipment of the wind power converter, and a wind power generation system, the wind turbine includes a machine-side converter and a grid-side converter, the machine-side converter and the grid-side converter are electrically connected through a DC bus, and the DC bus is also connected to an energy storage apparatus. The power control amount can be obtained based on the given value of the DC bus voltage and the feedback value of the DC bus voltage. In a case that the power control amount exceeds the energy storage power capacity range of the energy storage apparatus, the power control amount that the energy storage apparatus can bear is preferentially allocated to the energy storage apparatus, and the first power control amount is split from the power control amount for the energy storage apparatus according to the power capacity boundary value of the energy storage power capacity range, and the energy storage apparatus is controlled based on the first power control amount, so that the energy storage apparatus is preferentially allowed to provide inertia support for the power grid. The second power control amount obtained by splitting the power control amount is used to control the machine-side converter so that the rotor kinetic energy of the wind turbine provides another part of the inertia support for the power grid. The energy storage apparatus and the rotor kinetic energy jointly provide inertia support, minimize the inertia support provided by the rotor kinetic energy of the wind turbine to the power grid, reduce or even avoid the situation where the fatigue load of the wind turbine exceeds the limit, thereby improving the stability of the wind turbine.

### BRIEF DESCRIPTION OF THE DRAWINGS

In order to more clearly illustrate the technical solution of the embodiments of the present disclosure, the drawings required for use in the embodiments of the present disclosure will be introduced briefly below, for those skilled in this art, other drawings can also be obtained based on these drawings without creative work.
FIG. 1 is a schematic diagram of an architecture of a wind power generation system provided in an embodiment of the present disclosure;
FIG. 2 is a flow chart of a control method of a wind power converter provided in an embodiment of the present disclosure;
FIG. 3 is a schematic diagram of a logical architecture of an embodiment of the control method of the wind power converter provided in an embodiment of the present disclosure;
FIG. 4 is a flow chart of the control method of the wind power converter provided in another embodiment of the present disclosure;
FIG. 5 is a flow chart of the control method of the wind power converter provided in another embodiment of the present disclosure;
FIG. 6 is a flow chart of the control method of the wind power converter provided in another embodiment of the present disclosure;
FIG. 7 is a schematic structural diagram of a control device of the wind power converter provided in an embodiment of the present disclosure;
FIG. 8 is a schematic structural diagram of the control device of the wind power converter provided in another embodiment of the present disclosure;
FIG. 9 is a schematic structural diagram of the control device of the wind power converter provided in another embodiment of the present disclosure; and
FIG. 10 is a schematic structural diagram of a control equipment of the wind power converter provided in an embodiment of the present disclosure.

### DETAILED DESCRIPTION

The features and exemplary embodiments of various aspects of the present disclosure will be described in detail below. In order to make the purpose, technical solutions and advantages of the present disclosure clearer, the present disclosure is further described in detail below in conjunction with the drawings and specific embodiments. It should be understood that the specific embodiments described herein are intended only to explain the present disclosure, rather than to limit the present disclosure. For those skilled in the art, the present disclosure can be implemented without the need for some of these specific details. The following description of the embodiments is only to provide a better understanding of the present disclosure by showing embodiments of the present disclosure.

A wind turbine is an apparatus that can convert wind energy into electrical energy. The electrical energy generated by a wind turbine can be transmitted to a power grid via transmission networks for distribution by the power grid. With the development of wind power generation technology, in the case of significant frequency fluctuations in the power grid, the rotor kinetic energy of the generator in the wind turbine can be utilized to provide inertia support for the power grid. However, relying on the rotor kinetic energy of the generator in the wind turbine to provide inertia support for the power grid, the wind turbine may experience excessive fatigue load, thereby reducing the stability of the wind turbine.

The embodiments of the present disclosure provide a control method of a wind power converter, a control device of the wind power converter, and a control equipment of the wind power converter, and a wind power generation system, which are applied to the wind turbine. The DC bus between the machine-side converter and the grid-side converter in the wind turbine can be connected to an energy storage apparatus, and the energy storage apparatus can also provide inertia support for the power grid. The power control amount can be obtained based on the voltage parameter of the DC bus. When the power control amount exceeds the energy storage power capacity range of the energy storage apparatus, the power control amount is divided into two parts according to the power capacity of the energy storage apparatus, one part is used for controlling the energy storage apparatus, so that the energy storage apparatus provides inertia support, and the other part is used for controlling the machine-side converter, so that the rotor kinetic energy of the wind turbine provides inertia support. The energy storage apparatus and the rotor kinetic energy jointly provide inertia support, minimize the inertia support provided by the rotor kinetic energy of the generator to the power grid, reduce or even avoid the situation where the fatigue load of the wind turbine exceeds the limit, thereby improving the stability of the wind turbine.

The control method of the wind power converter, the control device of the wind power converter, the control equipment of the wind power converter, and the wind power generation system provided by the present disclosure are introduced respectively below.

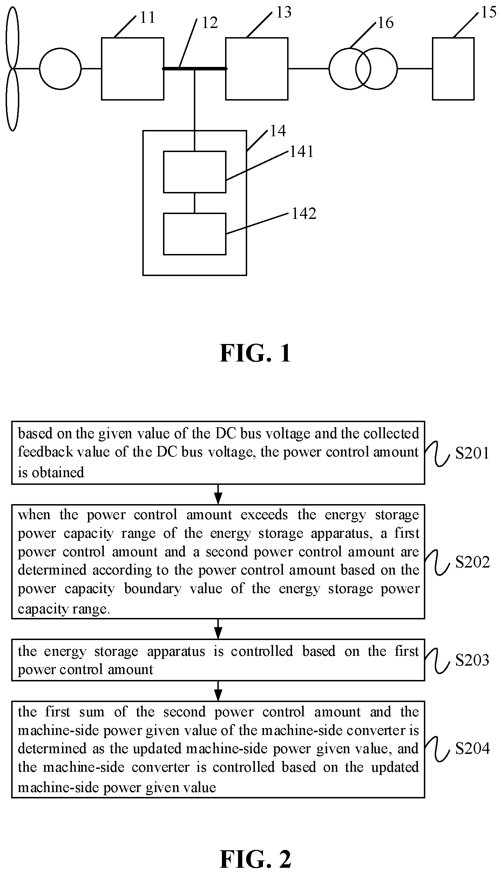

In order to facilitate understanding, a brief description of the architecture of the wind power generation system in the embodiments of the present disclosure is provided here. FIG. 1 is a schematic diagram of an architecture of a wind power generation system provided in an embodiment of the present disclosure. As shown in FIG. 1, the wind turbine includes a machine-side converter 11 and a grid-side converter 13. The grid-side converter 13 is electrically connected to the machine-side converter 11 through a DC bus 12, and the DC bus 12 is also connected to an energy storage apparatus 14.

The machine-side converter 11 can be configured to convert the AC power output by the generator of the wind turbine into DC power and output the DC power to the DC bus 12. The type of the machine-side converter 11 is not limited here.

The grid-side converter 13 can be configured to convert the DC power transmitted by the DC bus 12 into AC power and output the AC power. The type of the grid-side converter 13 is not limited here. The grid-side converter 13 can be electrically connected to the power grid 15, and other apparatuses can be included between the grid-side converter 13 and the power grid 15, which are not limited here. For example, a transformer 16 can be disposed between the grid-side converter 13 and the power grid 15.

The energy storage apparatus 14 is connected to the DC bus 12. The energy storage apparatus 14 may include but is not limited to apparatuses such as batteries and flywheel apparatuses that can store and release energy. The energy storage capacity of the energy storage apparatus 14 can be selected according to the scene and demand of the wind turbine and the power grid 15, and is not limited here. In the embodiments of the present disclosure, when the frequency of the power grid 15 decreases, the energy storage apparatus 14 can release energy; when the frequency of the power grid 15 increases, the energy storage apparatus 14 can absorb and store energy, or release the stored energy. In some embodiments, as shown in FIG. 1, the energy storage apparatus 14 may include an energy converter 141 and an energy storage device 142, and the types of the energy converter 141 and the energy storage device 142 are not limited here. For example, the energy converter 141 may be a DC-DC converter, and the energy storage device 142 may be a battery.

In the wind power generation system of the embodiments of the present disclosure, the energy storage apparatus 14 and the rotor kinetic energy work coordinately to provide inertia support for the power grid 15, which can reduce the requirements for the performance of the energy storage apparatus 14 such as the charge and discharge rate and energy density, thereby reducing the cost of the energy storage apparatus 14. The use of the energy storage apparatus 14 with lower energy storage performance can also meet the demand for providing inertia support for the power grid and ensure the stability of the wind power generation system.

A first aspect of the present disclosure provides a control method of the wind power converter, which can be applied to the wind turbine and the wind power generation system in the above-mentioned embodiments. The control method of the wind power converter can be executed by a control device of the wind power converter, a control equipment of the wind power converter, etc. FIG. 2 is a flow chart of a control method of the wind power converter provided by an embodiment of the present disclosure. As shown in FIG. 2, the control method of the wind power converter may include steps S201 to S204.

In step S201, based on the given value of the DC bus voltage and the collected feedback value of the DC bus voltage, the power control amount is obtained.

The given value of the DC bus voltage is a preset value of the DC bus voltage, which can be set according to the scene, demand, etc. The feedback value of the DC bus voltage is an actual voltage value of the collected DC bus. The difference value between the given value of the DC bus voltage and the feedback value of the DC bus voltage can be calculated first, and the difference value can be processed by proportional-integral control, such as inputting the difference value into a proportional-integral controller, i.e., a PI controller, so as to obtain the power control amount. The power control amount is used to control the energy storage apparatus and the machine-side converter, or to control the energy storage apparatus.

In step S202, when the power control amount exceeds the energy storage power capacity range of the energy storage apparatus, a first power control amount and a second power control amount are determined according to the power control amount based on the power capacity boundary value of the energy storage power capacity range.

The power control amount and the energy storage power capacity range of the energy storage apparatus can be compared. If the power control amount exceeds the energy storage power capacity range of the energy storage apparatus, it indicates that the energy storage apparatus is unable to provide the inertia support corresponding to the power control amount on its own; if the power control amount is within the energy storage power capacity range of the energy storage apparatus, it indicates that the energy storage apparatus can provide the inertia support corresponding to the power control amount on its own.

In a case that the power control amount exceeds the energy storage power capacity range of the energy storage apparatus, the power control amount can be divided into two parts, namely, the first power control amount and the second power control amount. The first power control amount is used to control the energy storage apparatus and corresponds to the power capacity boundary value. The second power control amount is used to control the machine-side converter. In the embodiments of the present disclosure, the energy storage apparatus is preferentially configured to provide inertia support for the power grid, and the first power control amount is obtained according to the power capacity boundary value of the energy storage power capacity range. In some embodiments, the power capacity boundary value of the energy storage power capacity range may include the maximum discharge power or the maximum charging power of the energy storage power capacity range. When the frequency of the power grid decreases, the power capacity boundary value of the energy storage power capacity range is the maximum discharge power of the energy storage power capacity range; when the frequency of the power grid increases, the power capacity boundary value of the energy storage power capacity range is the maximum charging power of the energy storage power capacity range.

The sum of the first power control amount and the second power control amount is the power control amount, that is, after obtaining the first power control amount, the difference value between the power control amount and the first power control amount can be calculated, and the difference value is determined as the second power control amount.

In step S203, the energy storage apparatus is controlled based on the first power control amount.

The power feedback value of the energy storage apparatus can be obtained, and the energy storage apparatus can be controlled based on the first power control amount and the power feedback value using a preset control strategy. The control strategy for the energy storage apparatus may include a power control strategy and/or a non-power control strategy, which is not limited here. The input of the power control strategy may include the power control amount, and the input of the power control strategy may include the power difference between the first power control amount and the power feedback value. For example, the power control strategy may include a control strategy such as a power closed-loop strategy that directly uses the power control amount as input. The non-power control strategy may include a control strategy such as a current closed-loop strategy that uses the non-power control amount as input, and the input of the non-power control strategy may be obtained based on the conversion of the power control amount.

In some embodiments, a third power control amount is obtained based on the first power control amount and the collected power feedback value of the energy storage apparatus; based on the third power control amount, the energy storage apparatus is controlled using the power closed-loop strategy. The power feedback value of the energy storage apparatus is the collected actual power of the energy storage apparatus. The third power control amount may be the difference value between the first power control amount and the power feedback value of the energy storage apparatus. The third power control amount can be used as the input of the power closed-loop strategy, and the energy storage module is controlled to store or release energy based on the power closed-loop strategy.

In some embodiments, the third power control amount is obtained based on the first power control amount and the collected power feedback value of the energy storage apparatus; the third power control amount is converted into the first non-power control amount, and the energy storage apparatus is controlled by the first non-power control strategy according to the first non-power control amount. The content of the third power control amount can be referred in the relevant description in the above-mentioned embodiments, which may not be repeated here. The first non-power control amount includes the non-power control amount. The input of the first non-power control strategy is a non-power control amount. In the embodiments of the present disclosure, the input of the first non-power control strategy is the first non-power control amount. For example, the first non-power control amount includes a current control amount, and the first non-power control strategy may include a control strategy with the current control amount as the input, such as the current closed-loop strategy.

In some embodiments, the energy storage apparatus can also be controlled by the power closed-loop strategy and the first non-power control strategy based on the first power control amount and the first non-power control amount. For example, the energy storage value can be controlled based on the first power control amount and the current control amount converted from the first power control amount, with the inner loop adopting a current closed-loop strategy and the outer loop adopting a power closed-loop strategy.

In step S204, the first sum of the second power control amount and the machine-side power given value of the machine-side converter is determined as the updated machine-side power given value, and the machine-side converter is controlled based on the updated machine-side power given value.

In addition to providing inertia support corresponding to its original machine-side power given value, the rotor kinetic energy of the wind turbine also needs to provide inertia support corresponding to the second power control amount allocated to the machine-side converter. The machine-side power given value is a preset value of the power of the machine-side converter, which can be set according to the scene, demand, etc. The first sum of the second power control amount and the machine-side power given value of the machine-side converter can be determined as the updated machine-side power given value, and the inertia corresponding to the updated machine-side power given value is the sum of the inertia corresponding to its original machine-side power given value and the inertia corresponding to the second power control amount.

A preset control strategy can be used to control the machine-side converter based on the updated machine-side power given value and the machine-side power feedback value. The control strategy for the machine-side converter may include a power control strategy and/or a non-power control strategy, which is not limited here. The input of the power control strategy may include a power control amount, for example, the power control strategy may include a control strategy such as a power closed-loop control strategy that directly uses the power control amount as input. The non-power control strategy may include the control strategies such as vector control and direct torque control that use the non-power control amount as input. The input of non-power control strategy may be converted based on the power control amount.

In some embodiments, a fourth power control amount may be obtained based on the updated machine-side power given value and the collected machine-side power feedback value, and the machine-side converter may be controlled based on a power closed-loop strategy according to the fourth power control amount. The machine-side power feedback value is the collected actual power of the machine-side converter. The fourth power control amount may be the difference value between the updated machine-side power given value and the machine-side power feedback value. The fourth power control amount may be used as an input to a power closed-loop strategy, and the machine-side converter may be controlled based on the power closed-loop strategy, thereby controlling the inertial support provided by the rotor kinetic energy of the wind turbine.

In some embodiments, a fourth power control amount may be obtained based on the updated machine-side power given value and the collected machine-side power feedback value, and the fourth power control amount may be converted into a second non-power control amount, and the machine-side converter may be controlled based on a second non-power control strategy according to the second non-power control amount. The content of the fourth power control amount can be referred to the relevant description in the above-mentioned embodiments, which may not be repeated here. The second non-power control amount includes a non-power control amount, and the input of the second non-power control strategy is a non-power control amount. In the embodiments of the present disclosure, the input of the second non-power control strategy is the second non-power control amount. For example, the second non-power control amount includes a current control amount, and the second non-power control strategy may include a control strategy with a current control amount as input, such as a vector control strategy. For another example, the second non-power control amount includes a torque control amount, and the second non-power control strategy may include a control strategy with a torque control amount as input, such as a direct torque control strategy.

In some embodiments, the machine-side converter can also be controlled by jointly using the power closed-loop strategy and the second non-power control strategy according to the fourth power control amount and the second non-power control amount, which is not limited here.

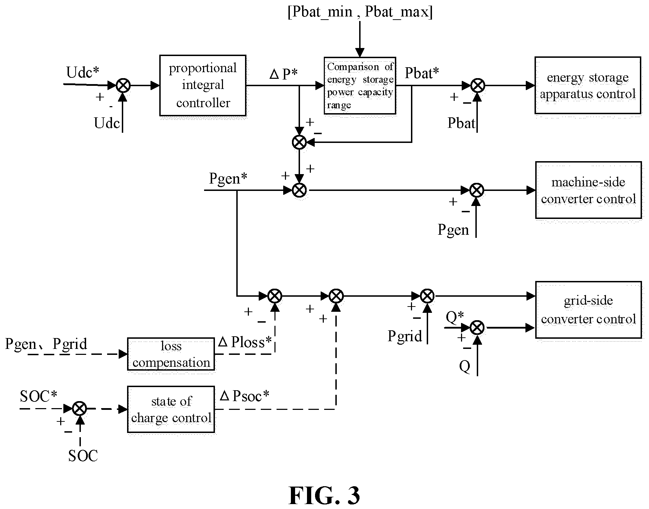

FIG. 3 is a schematic diagram of a logical architecture of an embodiment of a control method of the wind power converter provided in an embodiment of the present disclosure. As shown in FIG. 3, the difference value between the given value Udc* of the DC bus voltage and the feedback value Udc of the DC bus voltage is input into the proportional-integral controller to obtain the power control amount ΔP*. The power control amount ΔP* is compared with the energy storage power capacity range [Pbat_min, Pbat_max] of the energy storage apparatus. When the power control amount ΔP* exceeds the energy storage power capacity range [Pbat_min, Pbat_max], the first power control amount Pbat* is calculated according to the power capacity boundary value of the energy storage power capacity range [Pbat_min, Pbat_max]. The energy storage apparatus is controlled based on the difference value between the first power control amount Pbat* and the power feedback value Pbat of the energy storage apparatus, i.e., the third power control amount. The difference value between the power control amount ΔP* and the first power control amount Pbat* is determined as the second power control amount. The sum of the machine-side power given value Pgen* of the machine-side converter and the second power control amount is used as the updated machine-side power given value. The machine-side converter is controlled based on the difference value between the updated machine-side power given value and the machine-side power feedback value Pgen.

In an embodiments of the present disclosure, a wind turbine includes a machine-side converter and a grid-side converter, and the machine-side converter and the grid-side converter are electrically connected through a DC bus, and the DC bus is also connected to an energy storage apparatus. The power control amount can be obtained based on the given value of the DC bus voltage and the feedback value of the DC bus voltage. In a case that the power control amount exceeds the energy storage power capacity range of the energy storage apparatus, the power control amount that the energy storage apparatus can bear is preferentially allocated to the energy storage apparatus, and the first power control amount is split from the power control amount for the energy storage apparatus according to the power capacity boundary value of the energy storage power capacity range, and the energy storage apparatus is controlled based on the first power control amount, and the energy storage apparatus is preferentially enabled to provide inertia support for the power grid. The second power control amount obtained by splitting the power control amount is used to control the machine-side converter, so that the rotor kinetic energy of the wind turbine provides another part of the inertia support for the power grid. The energy storage apparatus and the rotor kinetic energy jointly provide inertia support, minimize the inertia support provided by the rotor kinetic energy of the wind turbine to the power grid, reduce or even avoid the situation where the fatigue load of the wind turbine exceeds the limit, thereby improving the stability of the wind turbine.

The energy storage apparatus and the rotor kinetic energy can jointly provide inertial support, and the energy storage apparatus can absorb energy to store and release the stored energy, which can ensure the stability of the DC bus voltage, avoid faults caused by overvoltage or undervoltage of the DC bus, and ensure the normal stability of the power of the wind turbine and the normal grid connection. Moreover, since the energy storage apparatus and the rotor kinetic energy can jointly provide inertial support, the requirements for the performance of the energy storage apparatus, such as the energy storage ratio, can also be appropriately reduced, thereby reducing the cost of the wind power generation system.

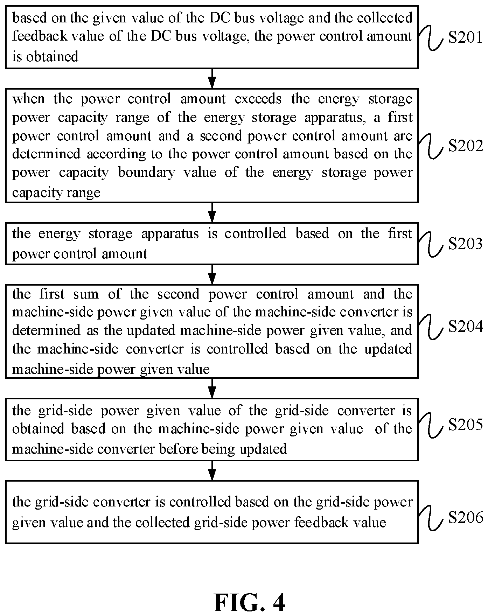

In some embodiments, the grid-side power given value of the grid-side converter can be obtained based on the machine-side power given value of the machine-side converter before being updated, and the grid-side converter is controlled. FIG. 4 is a flow chart of a control method of the wind power converter provided by another embodiment of the present disclosure. The difference between FIG. 4 and FIG. 2 is that the control method of the wind power converter shown in FIG. 4 further includes steps S205 and S206.

In step S205, the grid-side power given value of the grid-side converter is obtained based on the machine-side power given value of the machine-side converter before being updated.

The grid-side converter is connected to the machine-side converter through a DC bus, and the grid-side power given value of the grid-side converter can be determined based on the machine-side power given value of the machine-side converter before being updated.

In some embodiments, when the energy storage apparatus has the ability to ensure the stability of the DC bus voltage and the deviation between the power of the machine-side converter and the power of the grid-side converter is not taken into account, the machine-side power given value of the machine-side converter before being updated can be determined as the grid-side power given value of the grid-side converter.

In other embodiments, the machine-side power feedback value of the machine-side converter and the grid-side power feedback value of the grid-side converter can be obtained, and the first power difference between the machine-side power feedback value and the grid-side power feedback value can be calculated, and the difference value between the machine-side power given value of the machine-side converter before being updated and the first power difference is determined as the grid-side power given value of the converter. The machine-side power feedback value is the collected actual power of the machine-side converter. The grid-side power feedback value is the collected actual power of the grid-side converter. It should be noted that the term "collected" here may include data actively collected and data passively collected, and the data passively collected refers to data actively fed back by an entity from which the data is collected. The first power difference between the machine-side power feedback value and the grid-side power feedback value is equivalent to the inherent power loss between the machine-side converter and the grid-side converter. This power loss may cause power imbalance on the DC bus, thereby triggering the energy storage apparatus to release energy such as discharge to maintain the DC bus voltage stability. The continuous release of energy by the energy storage apparatus may affect the cycle life of the energy storage apparatus. Here, the difference value between the machine-side power given value of the machine-side converter before being updated and the first power difference is the grid-side power given value after compensating for the power loss. The grid-side converter is controlled based on the grid-side power given value after compensating for the power loss, which can avoid unnecessary power differences in the DC bus and avoid additional energy release by the energy storage apparatus. In some cases, the power loss can also be obtained by querying the power loss table based on the power segment of the machine-side power feedback value and the grid-side power feedback value, which is not limited here. In the embodiments of the present disclosure, the more accurate the compensation for power loss is, the less the energy storage apparatus needs to absorb and release energy, and the more guaranteed the protection of the cycle life of the energy storage apparatus is.

In step S206, the grid-side converter is controlled based on the grid-side power given value and the collected grid-side power feedback value.

The difference value between the grid-side power given value and the grid-side power feedback value can be calculated, and the grid-side converter is controlled by using a preset control strategy based on the difference value. The control strategy of the grid-side converter may include a power control strategy and/or a non-power control strategy. The specific contents of the power control strategy and the non-power control strategy can be referred in the relevant descriptions in the above embodiments, which will not be repeated here. The control of the grid-side converter can be implemented by a voltage source control strategy or a current source control strategy. The voltage source control strategy may include a virtual synchronous machine control strategy, a droop control strategy, etc., which are not limited here. The current source control strategy cannot passively respond to the inertia support demand of the power grid. When the current source control strategy is used to control the grid-side converter, the grid frequency can be actively collected and actively calculated according to the change of the grid frequency to actively respond to the inertia support demand of the power grid.

Refer to the part related to the grid-side converter control in FIG. 3. As shown in FIG. 3, the power loss ΔPloss* can be obtained according to the machine-side power feedback value Pgen and the grid-side power feedback value Pgrid, and the power loss ΔPloss* can be used for loss compensation. The grid-side power given value of the grid-side converter can be the difference value between the machine-side power given value Pgen* and the power loss ΔPloss*. The grid-side power given value refers to the grid-side active power given value, and the grid-side power feedback value refers to the grid-side active power feedback value. The difference value between the grid-side power given value and the grid-side power feedback value Pgrid is calculated, and the difference value between the grid-side reactive power given value Q* and the grid-side reactive power feedback value Q is calculated. The grid-side converter is controlled based on the difference value between the grid-side power given value and the grid-side power feedback value Pgrid, and the difference value between the grid-side reactive power given value Q* and the grid-side reactive power feedback value Q.

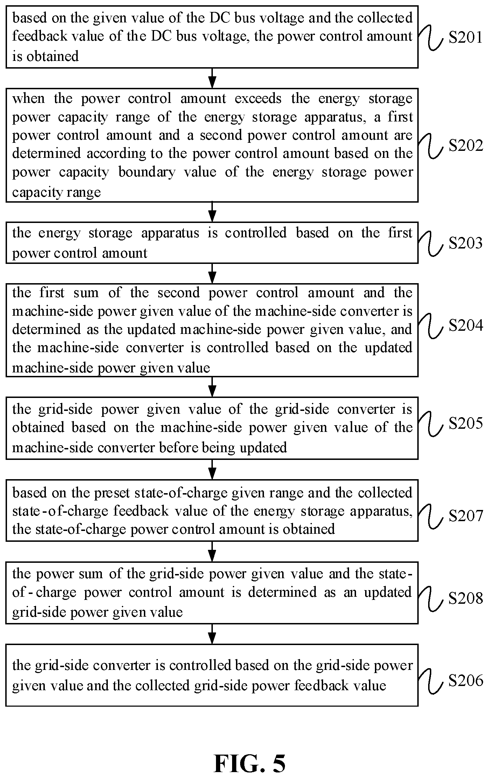

In the process of stabilizing the voltage of the DC bus, although the energy storage apparatus can reduce the demand for absorbing and releasing energy, i.e., the demand for charging and discharging, by means of power loss compensation, the state of charge, SOC, of the energy storage apparatus may change as long as the energy storage apparatus is in an operation state. In order to guarantee the safety and service life of the storage apparatus, the state-of-charge management of the energy storage apparatus can be performed so that the energy storage apparatus operates within a reasonable state-of-charge range. FIG. 5 is a flow chart of a control method of the wind power converter provided by another embodiment of the present disclosure. The difference between FIG. 5 and FIG. 4 is that the control method of the wind power converter shown in FIG. 5 further includes steps S207 and S208.

In step S207, based on the preset state-of-charge given range and the collected state-of-charge feedback value of the energy storage apparatus, the state-of-charge power control amount is obtained.

The preset state-of-charge given range is a suitable range of the state of charge that can ensure the safety and service life of the energy storage apparatus. The operating state of the energy storage apparatus within the state-of-charge given range is better than the operating state of the energy storage apparatus outside the state-of-charge given range. The state-of-charge feedback value may be the collected actual state of charge of the energy storage apparatus.

Based on the state-of-charge given range and the state-of-charge feedback value, the state-of-charge control amount may be obtained, and the state-of-charge control amount is the difference value between a value within the state-of-charge given range and the state-of-charge feedback value, and then the state-of-charge control amount is converted into the state-of-charge power control amount. For example, the state-of-charge power control amount may be obtained based on the state-of-charge control amount by using a proportional-integral differential method or a logical judgment method. The state-of-charge power control amount is used to superimpose on the grid-side power given value to obtain an updated grid-side power given value.

In some embodiments, a first state-of-charge difference value between a preset first state-of-charge given value and a state-of-charge feedback value may be calculated, and the state-of-charge power control amount may be obtained according to the first state-of-charge difference value, and the first state-of-charge given value is within the state-of-charge given range. That is, a value within the state-of-charge given range may be selected as the first state-of-charge given value, a first state-of-charge difference value may be obtained based on the first state of charge, and then the state-of-charge power control amount may be obtained based on the first state-of-charge difference value. By acting on the grid-side converter control with the state-of-charge power control amount, the state of charge of the energy storage apparatus can be brought closer to the first state-of-charge given value, and the state of charge of the energy storage apparatus can be adjusted through the grid-side converter control.

In other embodiments, it can be determined whether the state-of-charge feedback value is within the state-of-charge given range. When the state-of-charge feedback value is outside the state-of-charge given range, the second state-of-charge difference value between the preset second state-of-charge given value and the state-of-charge feedback value is calculated, and the state-of-charge power control amount is obtained according to the second state-of-charge difference value, and the second state-of-charge given value is within the state-of-charge given range. In this embodiment, the state-of-charge feedback value is within the state-of-charge given range, and the state of charge does not need to be adjusted. Only when the state-of-charge feedback value is outside the state-of-charge given range, the state of charge is adjusted, thereby reducing the number of unnecessary state-of-charge adjustments, saving control resources, and simplifying the control process of the grid-side converter. A value within the state-of-charge given range is selected as the second state-of-charge given value, a second state-of-charge difference value is obtained based on the second state of charge, and then the state-of-charge power control amount is obtained based on the second state-of-charge difference value. The state-of-charge power control amount acts on the grid-side converter control, so that the state of charge of the energy storage apparatus can be brought closer to the second state-of-charge given value, and the state of charge of the energy storage apparatus can be adjusted through the grid-side converter control. When the state of charge of the energy storage apparatus enters the state-of-charge given range, the steps of calculating the second state-of-charge difference value and obtaining the state-of-charge power control amount according to the second state-of-charge difference value are no longer executed.

In step S208, the power sum of the grid-side power given value and the state-of-charge power control amount is determined as an updated grid-side power given value.

The state-of-charge power control amount is superimposed on the grid-side power given value to obtain the updated grid-side power given value. The updated grid-side power given value has an additional deviation from the machine-side power given value. The additional deviation may cause the voltage of the DC bus to change. In order to stabilize the DC bus voltage, the energy storage apparatus may absorb or release energy, that is, charge or discharge, so as to adjust the state of charge of the energy storage apparatus by controlling the grid-side converter.

Refer to the part related to the control of the grid-side converter in FIG. 3. As shown in FIG. 3, the state-of-charge power control amount ΔPsoc* can be obtained according to the difference value between the state-of-charge given value SOC* (which can be the first state-of-charge given value or the second state-of-charge given value above) and the state-of-charge feedback value SOC. The grid-side power given value of the grid-side converter is the difference value between the machine-side power given value Pgen* and the power loss ΔPloss*. The state-of-charge power control amount ΔPsoc* is superimposed on the grid-side power given value to obtain the updated grid-side power given value. The difference value between the updated grid-side power given value and the grid-side power feedback value Pgrid is calculated, and the difference value between the grid-side reactive power given value Q* and the grid-side reactive power feedback value Q is calculated. Based on the difference value between the updated grid-side power given value and the grid-side power feedback value Pgrid, and the difference value between the grid-side reactive power given value Q* and the grid-side reactive power feedback value Q, the grid-side converter is controlled.

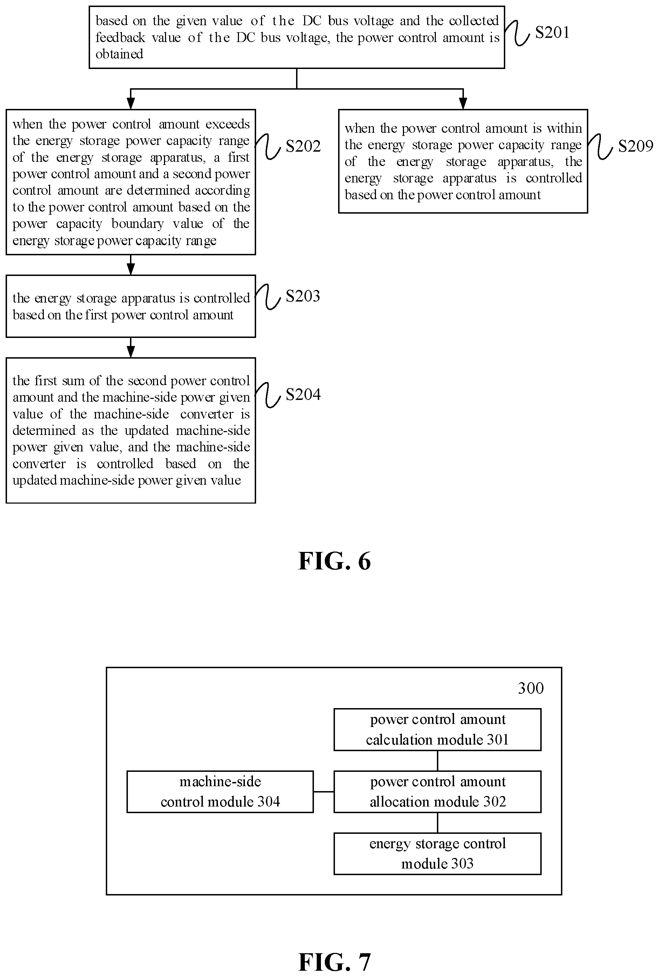

In the embodiments of the present disclosure, in order to reduce the risk of excessive wind fatigue load, the energy storage apparatus is preferentially controlled, and the energy storage apparatus provides inertia support for the power grid. FIG. 6 is a flow chart of a control method of the wind power converter provided in another embodiment of the present disclosure. The difference between FIG. 6 and FIG. 2 is that the control method of the wind power converter shown in FIG. 6 further includes step S209.

In step S209, when the power control amount is within the energy storage power capacity range of the energy storage apparatus, the energy storage apparatus is controlled based on the power control amount.

The power control amount is within the energy storage power capacity range of the energy storage apparatus, which indicates that the energy storage apparatus can provide the inertia support corresponding to the power control amount separately, and the energy storage apparatus is preferred to provide inertia support for the power grid.

In order to facilitate understanding of the process of the energy storage apparatus, or the energy storage apparatus and the rotor kinetic energy of the wind turbine jointly, providing inertia support i.e. inertia response for the power grid, the process of inertia response is briefly described below. In some cases, fluctuations in power grid frequency can cause changes in the phase of the power grid. When the grid-side converter recognizes the phase change of the power grid, which corresponds to the power angle change, and may provide active power for inertia support to suppress the frequency variation of the power grid. When the grid-side converter provides active power, power change may occur, and this power change may be transmitted to the DC bus, causing the voltage of the DC bus to fluctuate. In the embodiments of the present disclosure, the voltage closed-loop of the DC bus is controlled by the energy storage apparatus by default, that is, the energy storage apparatus responds preferentially to suppress the fluctuation of the DC bus. If the energy storage apparatus is sufficient to suppress the fluctuation of the DC bus, that is, the power control amount is within the energy storage power capacity range of the energy storage apparatus, the inertia required to stabilize the DC bus voltage is provided by the energy storage apparatus. If the power control amount provided by the energy storage apparatus has reached the energy storage power capacity range of the energy storage apparatus, but still cannot stabilize the voltage of the DC bus, that is, the power control amount exceeds the energy storage power capacity range of the energy storage apparatus, it is necessary to start the control of the machine-side converter, and the machine-side converter assists in stabilizing the voltage of the DC bus. The inertia required to stabilize the DC bus voltage is jointly provided by the energy storage apparatus and the rotor kinetic energy of the wind turbine.

In the embodiments of the present disclosure, the energy storage apparatus provides inertial support first to reduce the risk of excessive fatigue load of the wind turbine; the energy storage apparatus and the rotor kinetic energy of the wind turbine jointly provide inertial support, which can reduce the performance requirements of the energy storage apparatus, select an energy storage apparatus with a lower energy storage ratio, reduce the cost of the energy storage apparatus, and achieve a balance between the risk of excessive fatigue load and the cost of the wind turbine, so as to achieve a better current conversion control effect.

A second aspect of the present disclosure provides a control device of the wind power converter, which is applied to the wind turbine. The specific content of the wind turbine may be referred in the relevant description in the above embodiments, which may not be repeated here. FIG. 7 is a schematic structural diagram of a control device of the wind power converter provided by an embodiment of the present disclosure. As shown in FIG. 7, the control device 300 of the wind power converter may include a power control amount calculation module 301, a power control amount allocation module 302, an energy storage control module 303 and a machine-side control module 304.

The power control amount calculation module 301 can be configured to obtain the power control amount based on the given value of the DC bus voltage and the collected feedback value of the DC bus voltage.

The power control amount allocation module 302 can be configured to determine the first power control amount and the second power control amount according to the power control amount based on the power capacity boundary value of the energy storage power capacity range when the power control amount exceeds the energy storage power capacity range of the energy storage apparatus, and the first power control amount corresponds to the power capacity boundary value.

The energy storage control module 303 can be configured to control the energy storage apparatus based on the first power control amount.

The machine-side control module 304 can be configured to determine the first sum of the second power control amount and the machine-side power given value of the machine-side converter as the updated machine-side power given value, and control the machine-side converter based on the updated machine-side power given value.

In an embodiments of the present disclosure, the wind turbine includes a machine-side converter and a grid-side converter, and the machine-side converter and the grid-side converter are electrically connected through a DC bus, and the DC bus is also connected to an energy storage apparatus. The power control amount can be obtained based on the given value of the DC bus voltage and the feedback value of the DC bus voltage. In a case that the power control amount exceeds the energy storage power capacity range of the energy storage apparatus, the power control amount that the energy storage apparatus can bear is preferentially allocated to the energy storage apparatus, and the first power control amount is split from the power control amount for the energy storage apparatus according to the power capacity boundary value of the energy storage power capacity range, and the energy storage apparatus is controlled based on the first power control amount, and the energy storage apparatus is preferentially enabled to provide inertia support for the power grid. The second power control amount obtained by splitting the power control amount is used to control the machine-side converter so that the rotor kinetic energy of the wind turbine can provide another part of the inertia support for the power grid. The energy storage apparatus and the rotor kinetic energy jointly provide inertia support, minimize the inertia support provided by the rotor kinetic energy of the wind turbine for the power grid, reduce or even avoid the situation where the fatigue load of the wind turbine exceeds the limit, thereby improving the stability of the wind turbine.

The energy storage apparatus and the rotor kinetic energy can jointly provide inertia support. The energy storage apparatus can absorb energy to store and release the stored energy, which can ensure the stability of the DC bus voltage and avoid faults caused by overvoltage or undervoltage of the DC bus and can also ensure the normal and stable power of the wind turbine and thus normal grid connection. Moreover, since the energy storage apparatus and the rotor kinetic energy can jointly provide inertia support, the requirements for the performance of the energy storage apparatus, such as the energy storage ratio, can also be appropriately reduced, thereby reducing the cost of the wind power generation system.

In some embodiments, the energy storage control module 303 can be configured to: obtain a third power control amount based on the first power control amount and the collected power feedback value of the energy storage apparatus; control the energy storage apparatus based on a power closed-loop strategy according to the third power control amount, and/or convert the third power control amount into a first non-power control amount, and control the energy storage apparatus based on a first non-power control strategy according to the first non-power control amount, the first non-power control amount includes a non-power control amount, and the input of the first non-power control strategy is a non-power control amount.

In some embodiments, the machine-side control module 304 can be configured to: obtain a fourth power control amount based on the updated machine-side power given value and the collected machine-side power feedback value; control the machine-side converter based on a power closed-loop strategy according to the fourth power control amount, and/or convert the fourth power control amount into a second non-power control amount, and control the machine-side converter based on a second non-power control strategy according to the second non-power control amount, the second non-power control amount includes a non-power control amount, and the input of the second non-power control strategy is a non-power control amount.

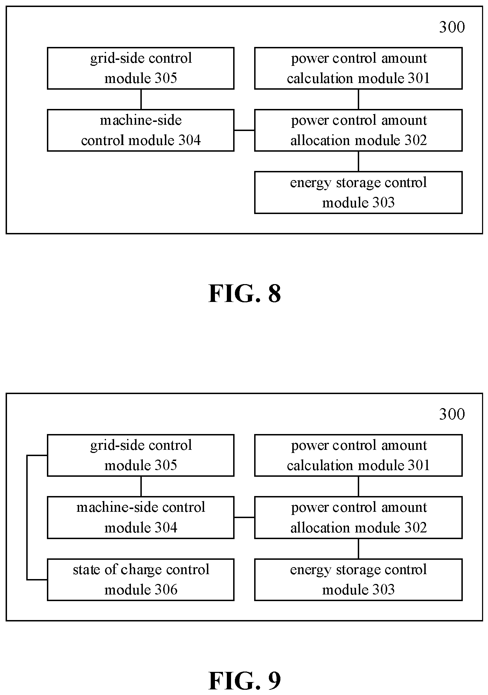

FIG. 8 is a schematic structural diagram of a control device of the wind power converter provided by another embodiment of the present disclosure. The difference between FIG. 8 and FIG. 7 is that the control device 300 of the wind power converter shown in FIG. 8 further includes a grid-side control module 305.

The grid-side control module 305 may be configured to: obtain a grid-side power given value of the grid-side converter based on the machine-side power given value of the machine-side converter before being updated; and control the grid-side converter based on the grid-side power given value and the collected grid-side power feedback value.

In some embodiments, the grid-side control module 305 may be configured to: determine the machine-side power given value of the machine-side converter before being updated as the grid-side power given value of the grid-side converter; or obtain the machine-side power feedback value of the machine-side converter and the grid-side power feedback value of the grid-side converter, calculate the first power difference between the machine-side power feedback value and the grid-side power feedback value, and determine the grid-side power given value of the converter based on the difference value between the machine-side power given value of the machine-side converter before being updated and the first power difference.

FIG. 9 is a schematic structural diagram of a control device of the wind power converter provided by another embodiment of the present disclosure. The difference between FIG. 9 and FIG. 8 is that the control device 300 of the wind power converter shown in FIG. 8 further includes a state-of-charge control module 306.

The state-of-charge control module 306 may be configured to: obtain the SOC power control amount based on the preset SOC given range and the collected SOC feedback value of the energy storage apparatus; and determine a power sum of the grid-side power given value and the SOC power control amount as an updated grid-side power given value.

In some embodiments, the state-of-charge control module 306 can be configured to: calculate a first SOC difference value between a preset first SOC given value and an SOC feedback value, obtain an SOC power control amount based on the first SOC difference value, and the first SOC given value is within an SOC given range.

In some embodiments, the state-of-charge control module 306 can be configured to: determine whether the SOC feedback value is within the SOC given range, and when the SOC feedback value is outside the SOC given range, calculate a second SOC difference value between a preset second SOC given value and the SOC feedback value, obtain an SOC power control amount based on the second SOC difference value, and the second SOC given value is within the SOC given range.

In some embodiments, the above-mentioned energy storage control module 303 can also be configured to: control the energy storage apparatus based on the power control amount when the power control amount is within the energy storage power capacity range of the energy storage apparatus.

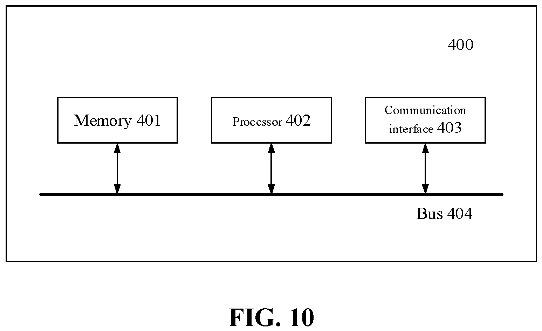

A third aspect of the present disclosure also provides a control equipment of the wind power converter, which can be implemented as a controller of the wind power converter or other equipment that can control the current conversion process of the wind turbine, which is not limited here. FIG. 10 is a schematic structural diagram of a control equipment of the wind power converter provided in an embodiment of the present disclosure. As shown in FIG. 10, the control equipment 400 of the wind power converter includes a memory 401, a processor 402, and a computer program stored in the memory 401 and executable on the processor 402.

In some embodiments, the above-mentioned processor 402 may include a central processing unit (CPU), or an disclosure specific integrated circuit (ASIC), or may be configured to implement one or more integrated circuits of the embodiments in present disclosure.

The memory 401 may include a read-only memory (ROM), a random access memory (RAM), a disk storage medium device, an optical storage medium device, a flash memory device, an electrical, optical or other physical/tangible memory storage device. Therefore, generally, the memory includes one or more tangible (non-transitory) computer-readable storage media (e.g., a memory device) encoded with software including computer executable instructions, and when the software is executed (e.g., by one or more processors), it can be operated to perform the operations described with reference to the control method of the wind power converter in the embodiments of the present disclosure.

The processor 402 runs a computer program corresponding to the executable program code by reading the executable program code stored in the memory 401, so as to implement the control method of the wind power converter in the above embodiments.

In some embodiments, the control equipment 400 of the wind power converter further includes a communication interface 403 and a bus 404. As shown in FIG. 10, the memory 401, the processor 402, and the communication interface 403 are connected through the bus 404 and communicate with each other.

The communication interface 403 is mainly configured to realize the communication between the modules, apparatus, units and/or equipment in the embodiments of the present disclosure. The input equipment and/or output equipment can also be accessed through the communication interface 403.

The bus 404 includes hardware, software or both, and couples the components of the control equipment 400 of the wind power converter to each other. By way of example and not limitation, bus 404 may include an Accelerated Graphics Port (AGP) or other graphics bus, an Enhanced Industry Standard Architecture (EISA) bus, a Front Side Bus (FSB), a Hyper Transport (HT) interconnect, an Industry Standard Architecture (ISA) bus, an InfiniBand interconnect, a Low Pin Count (LPC) bus, a Memory bus, a Micro Channel Architecture (MCA) bus, a Peripheral Component Interconnect (PCI) bus, a PCI-Express (PCI-E) bus, a Serial Advanced Technology Attachment (SATA) bus, a Video Electronics Standards Association Local Bus (VLB) bus, or other suitable buses or a combination of two or more of these. Where appropriate, bus 404 may include one or more buses. Although the embodiments of the present disclosure describe and illustrate specific buses, the present disclosure contemplates any suitable bus or interconnect.

A fourth aspect of the present disclosure provides a wind power generation system, which may include the wind turbine, energy storage apparatus and control equipment of the wind power converter in the above embodiments. The architecture of the wind turbine and the energy storage apparatus can be seen in FIG. 1, which is not repeated here. The control equipment of the wind power converter can execute the control method of the wind power converter in the above embodiments, and can achieve the same technical effect. To avoid repetition, it is not repeated here.

The embodiments of the present disclosure can also provide a computer-readable storage medium, which stores computer program instructions. When the computer program instructions are executed by the processor, the control method of the wind power converter in the above embodiments can be implemented, and the same technical effect can be achieved. To avoid repetition, it is not repeated here. The above-mentioned computer-readable storage medium may include a non-transient computer-readable storage medium, such as a read-only memory (ROM), a random access memory (RAM), a disk or an optical disk, etc., which is not limited here.

The embodiments of the present disclosure further provides a computer program product, and when the instructions in the computer program product can be executed by the processor of the electronic device, the electronic device executes the control method of the wind power converter in the above embodiments, and can achieve the same technical effect. To avoid repetition, it is not be repeated here.

It should be clear that the various embodiments in this specification are described in a progressive manner, and the same or similar parts between the various embodiments can be referred to each other, and each embodiment focuses on the differences from other embodiments. For the apparatus embodiment, equipment embodiment, system embodiment, computer-readable storage medium embodiment, and computer program product embodiment, the relevant parts can refer to the description part of the method embodiment. The present disclosure is not limited to the specific steps and structures described above and shown in the figure. After understanding the gist of the present disclosure, those skilled in the art can make various changes, modifications and additions, or change the order between the steps. In addition, for the sake of simplicity, a detailed description of the known method technology is omitted here.

The above describes various aspects of the present disclosure with reference to the flowcharts and/or block diagrams of the methods, apparatus (systems) and computer program products according to the embodiments of the present disclosure. It should be understood that each box in the flowchart and/or block diagram and the combination of boxes in the flowchart and/or block diagram can be implemented by computer program instructions. These computer program instructions can be provided to a processor of a general-purpose computer, a special-purpose computer, or other programmable data processing apparatus to produce a machine so that these instructions executed by the processor of the computer or other programmable data processing apparatus enable the implementation of the functions/actions specified in one or more boxes in the flowchart and/or block diagram. Such a processor can be, but is not limited to, a general-purpose processor, a special-purpose processor, a special disclosure processor, or a field programmable logic circuit. It can also be understood that each box in the block diagram and/or flowchart and the combination of boxes in the block diagram and/or flowchart can also be implemented by special-purpose hardware that performs the specified function or action, or can be implemented by a combination of special-purpose hardware and computer instructions.

Those skilled in the art should understand that the above embodiments are exemplary and non-restrictive. Different technical features appearing in different embodiments can be combined to achieve beneficial effects. Those skilled in the art should be able to understand and implement other variations of the disclosed embodiments based on the study of the drawings, the specification, and the claims. In the claims, the term "comprising" does not exclude other means or steps; the quantifier "a" does not exclude a plurality; the terms "first" and "second" are used to indicate names rather than to indicate any particular order. Any reference numerals in the claims should not be understood as limiting the scope of protection. The functions of multiple parts appearing in the claims can be implemented by a single hardware or software module. The fact that certain technical features appear in different dependent claims does not mean that these technical features cannot be combined to achieve beneficial effects.

## Claims

1. A control method of a wind power converter, applied to a wind turbine comprising a machine-side converter and a grid-side converter, the grid-side converter being electrically connected to the machine-side converter through a DC bus, and the DC bus is also electrically connected to an energy storage apparatus, the method comprising:
obtaining a power control amount based on a given value of a DC bus voltage and a collected feedback value of the DC bus voltage;
determining a first power control amount and a second power control amount according to the power control amount based on a power capacity boundary value of the energy storage power capacity range when the power control amount exceeds an energy storage power capacity range of the energy storage apparatus, wherein the first power control amount corresponds to the power capacity boundary value;
controlling the energy storage apparatus based on the first power control amount;
determining a first sum of the second power control amount and a machine-side power given value of the machine-side converter as an updated machine-side power given value, and controlling the machine-side converter based on the updated machine-side power given value.

2. The method according to claim 1, wherein the controlling the energy storage apparatus based on the first power control amount comprises:
obtaining a third power control amount based on the first power control amount and a collected power feedback value of the energy storage apparatus;
controlling the energy storage apparatus based on a power closed-loop strategy according to the third power control amount, and/or, converting the third power control amount into a first non-power control amount, and controlling the energy storage apparatus based on a first non-power control strategy according to the first non-power control amount, wherein the first non-power control amount comprises a non-power control amount, and an input of the first non-power control strategy is the non-power control amount.

3. The method according to claim 1, wherein the controlling the machine-side converter based on the updated machine-side power given value comprises:
obtaining a fourth power control amount based on the updated machine-side power given value and a collected machine-side power feedback value;
controlling the machine-side converter based on a power closed-loop strategy according to the fourth power control amount, and/or, converting the fourth power control amount into a second non-power control amount, and controlling the machine-side converter based on a second non-power control strategy according to the second non-power control amount, wherein the second non-power control amount comprises a non-power control amount, and an input of the second non-power control strategy is the non-power control amount.

4. The method according to claim 1, further comprising:
obtaining a grid-side power given value of the grid-side converter based on the machine-side power given value of the machine-side converter before being updated;
controlling the grid-side converter based on the grid-side power given value and a collected grid-side power feedback value.

5. The method according to claim 4, wherein the obtaining a grid-side power given value of the grid-side converter based on the machine-side power given value of the machine-side converter before being updated comprises:
determining the machine-side power given value of the machine-side converter before being updated as the grid-side power given value of the grid-side converter;
or,
obtaining the machine-side power feedback value of the machine-side converter and the grid-side power feedback value of the grid-side converter,
calculating a first power difference between the machine-side power feedback value and the grid-side power feedback value,
determining a difference value between the machine-side power given value of the machine-side converter before being updated and the first power difference as the grid-side power given value of the converter.

6. The method according to claim 4, before controlling the grid-side converter based on the grid-side power given value and a collected grid-side power feedback value, the method further comprises:
obtaining a state of charge, SOC, power control amount based on a preset SOC given range and a collected SOC feedback value of the energy storage apparatus;
determining a power sum of the grid-side power given value and the SOC power control amount as an updated grid-side power given value.

7. The method according to claim 6, wherein the obtaining an SOC power control amount based on a preset SOC given range and a collected SOC feedback value of the energy storage apparatus comprises:
calculating a first SOC difference value between a preset first SOC given value and the SOC feedback value, wherein the first SOC given value is within the SOC given range,
obtaining the SOC power control amount based on the first SOC difference value;
or,
determining whether the SOC feedback value is within the SOC given range,
in a case that the SOC feedback value is outside the SOC given range, calculating a second SOC difference value between a preset second SOC given value and the SOC feedback value, wherein the second SOC given value is within the SOC given range,
obtaining the SOC power control amount based on the second SOC difference value.

8. The method according to claim 1, wherein the method further comprises:
controlling the energy storage apparatus based on the power control amount, in a case that the power control amount is within an energy storage power capacity range of the energy storage apparatus.

9. A control device of a wind power converter, applied to a wind turbine comprising a machine-side converter and a grid-side converter, the grid-side converter being electrically connected to the machine-side converter through a DC bus, and the DC bus is also electrically connected to an energy storage apparatus, the device comprising:
a power control amount calculation module, configured to obtain a power control amount based on a given value of a DC bus voltage and a collected feedback value of the DC bus voltage;
a power control amount allocation module, configured to determine a first power control amount and a second power control amount according to the power control amount based on a power capacity boundary value of the energy storage power capacity range when the power control amount exceeds an energy storage power capacity range of the energy storage apparatus, wherein the first power control amount corresponds to the power capacity boundary value;
an energy storage control module, configured to control the energy storage apparatus based on the first power control amount;
a machine-side control module, configured to determine a first sum of the second power control amount and a machine-side power given value of the machine-side converter as an updated machine-side power given value, and control the machine-side converter based on the updated machine-side power given value.

10. A control equipment of a wind power converter, comprising: a processor and a memory storing computer program instructions;
when the processor executes the computer program instructions, the control method of the wind power converter according to any one of claims 1 to 8 is implemented.

11. A wind power generation system, comprising:
a wind turbine, comprising a machine-side converter and a grid-side converter, wherein the grid-side converter is electrically connected to the machine-side converter through a DC bus;
an energy storage apparatus, electrically connected to the DC bus; and
the control equipment of the wind power converter according to claim 10.
